(19) Europäisches Patentamt / European Patent Office / Office européen des brevets

(11) **EP 2 862 160 B1**

(12) **EUROPEAN PATENT SPECIFICATION**

(45) Date of publication and mention
of the grant of the patent:
**23.10.2019 Bulletin 2019/43**

(51) Int Cl.:
***B60W 50/00*** *(2006.01)*   ***G08G 1/16*** *(2006.01)*
***G05D 1/02*** *(2006.01)*   ***B60W 30/16*** *(2012.01)*

(21) Application number: **13810144.9**

(22) Date of filing: **12.06.2013**

(86) International application number:
**PCT/SE2013/050673**

(87) International publication number:
**WO 2014/003630 (03.01.2014 Gazette 2014/01)**

(54) **SYSTEM AND METHOD FOR REGULATING OF VEHICLE PERTAINING TO A VEHICLE TRAIN**

SYSTEM UND VERFAHREN ZUR REGELUNG EINES FAHRZEUGS EINES FAHRZEUGVERBANDES

SYSTÈME ET PROCÉDÉ DE RÉGULATION DE VÉHICULES APPARTENANT À UN TRAIN DE VÉHICULES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **14.06.2012 SE 1250628**

(43) Date of publication of application:
**22.04.2015 Bulletin 2015/17**

(73) Proprietor: **Scania CV AB**
**151 87 Södertälje (SE)**

(72) Inventors:
• **KEMPPAINEN, Josefin**
**126 35 Hägersten (SE)**
• **NILSSON, Sanna**
**S-783 34 Säter (SE)**
• **PETTERSSON, Hanna**
**S-713 92 Gyttorp (SE)**
• **AL ALAM, Assad**
**S-121 31 Enskededalen (SE)**
• **PETTERSSON, Henrik**
**S-141 73 Segeltorp (SE)**

(74) Representative: **Scania CV AB**
**Patents, GP 117kv**
**151 87 Södertälje (SE)**

(56) References cited:
WO-A1-2012/014041   WO-A1-2012/020297
US-A- 5 777 451   US-A1- 2010 256 835

• TEO R ET AL: "Decentralized Spacing Control of a String of Multiple Vehicles Over Lossy Datalinks", IEEE TRANSACTIONS ON CONTROL SYSTEMS TECHNOLOGY, IEEE SERVICE CENTER, NEW YORK, NY, US, vol. 18, no. 2, 1 March 2010 (2010-03-01), pages 469-473, XP011296853, ISSN: 1063-6536
• Luisa Ruiz De Arbulo Gubìa ET AL: "The effect of wireless communication on the distance control between vehicles", 16th Annual Symposium on Communications and Vehicular Technology in the Benelux, 19 November 2009 (2009-11-19), XP055010590, Retrieved from the Internet: URL:http://www.fmtc.be/downloads/Communica tions&Software/scvt2009-final9.pdf [retrieved on 2011-10-26]
• XIANGHENG LIU ET AL: "Effects of communication delay on string stability in vehicle platoons", INTELLIGENT TRANSPORTATION SYSTEMS, 2001. PROCEEDINGS. 2001 IEEE AUGUST 25-29, 2001, PISCATAWAY, NJ, USA,IEEE, 25 August 2001 (2001-08-25), pages 625-630, XP010555845, ISBN: 978-0-7803-7194-1

## Description

Field of the invention

The present invention relates to a technique for regulating vehicles in a vehicle train and in particular to a system and a method for regulating vehicles in vehicle trains when there are losses in wireless transmission of data, according to the preambles of the independent claims.

Background to the invention

The already high traffic volume on Europe's major roads is expected to increase still further. The energy required for carrying freight on these roads is also enormous and growing. A possible contribution to solving these problems is to have trucks travel close together in so-called vehicle trains ("platoons"). Travelling close together in a vehicle train considerably lowers the air resistance to trucks, reduces their energy requirements and uses the transport system more efficiently. Vehicle train means here a number of vehicles travelling with close spacing between them and as a unit. Studies have shown that the fuel consumption of a train's leading vehicle may be reduced by 2-10% and that of the following vehicle by 15-20%, as compared with a lone vehicle. These figures are based on the distance between the trucks being 8-16 metres and on travelling at 80 km/h. The lower fuel consumption means a corresponding reduction in $CO_2$ emissions.

These well-known facts are currently already being put to advantage by drivers, with consequently lowered traffic safety. A fundamental issue concerning vehicle trains is how to reduce the time gap between vehicles from a recommended 3 seconds to between 0.5 and 1 second without affecting traffic safety. The recommended time gap is currently based on

- driver reaction time
- delays in vehicle brake systems
- vehicle stopping distances

Driver reaction time can be eliminated by using distance sensors and cameras, a type of technique already used today by systems such as ACC (adaptive cruise control) and LKA (lane keeping assistance). There is however a limitation in that distance sensors and cameras need a clear view of the target, making it difficult to detect what is happening more than a couple of vehicles ahead in the queue. A further limitation is that they cannot react proactively, i.e. react to occurrences which have had no marked effect on the pace of traffic.

A development of IEEE standard 802.11 for WLAN (wireless local area networks) called 802.11p allows wireless transmission of information between vehicles, and between vehicles and infrastructures. Various kinds of information may be sent to and from the vehicles, e.g. vehicle parameters and strategies. A vehicle ahead in a train may thus for example

- send information about its own state, i.e. weight, speed, power output, location etc.,
- send information about forms of action which affect nearby traffic, e.g. braking,
- acting as a probe for vehicles behind by passing reports about traffic occurrences rearwards in the vehicle train.

This access to information makes it possible to create new functions, e.g. for helping drivers to drive more efficiently and more safely. The development of communication techniques has made it possible to design trucks and infrastructures which support the use of vehicle trains. A vehicle train can operate as a unit, thereby damping fluctuations in the train caused by speed changes and consequently allowing closer spacing and better overall traffic flow.

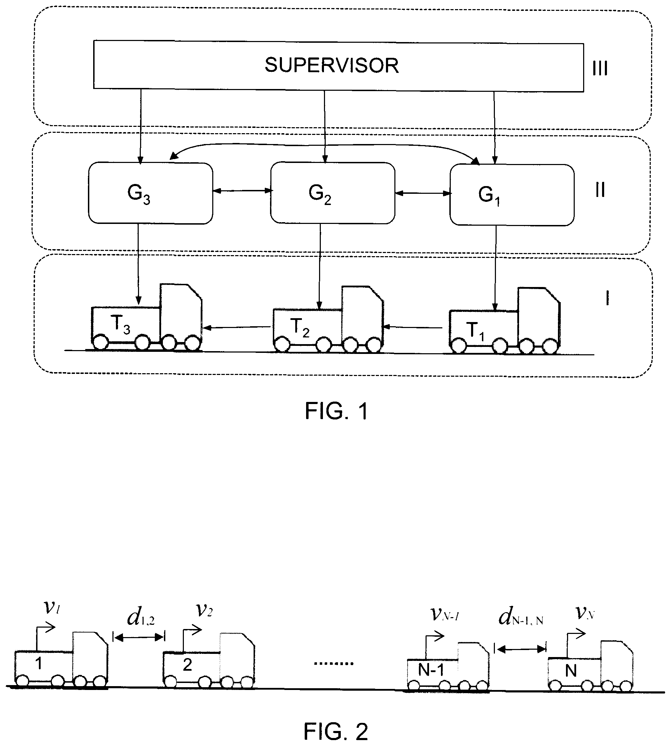

ACC only takes the vehicle in front into account via information from radar and maintains a distance from that vehicle as a result of a predetermined time gap set by the driver. Figure 1 is a schematic diagram of the system architecture for different levels of information structures for a vehicle train which here comprises vehicles $T_1$, $T_2$ and $T_3$. The arrows in the diagram illustrate prevailing communication paths for the structure. ACC in Figure 1 takes the form of a first communication interface "I". Introducing vehicle-to-vehicle communication (V2V communication) represented by the interface "II" in Figure 1 makes it possible for information to be exchanged between the nearby vehicles. $G_1$, $G_2$ and $G_3$ represent units built into the vehicles and adapted to receiving and sending information wirelessly. A further way to communicate is via vehicle-to-infrastructure communication (V2I communication), illustrated as a further layer "III" whereby vehicles can exchange information wirelessly with, for example roadside units with built-in intelligence. A roadside unit is here depicted as "SUPERVISOR".

For the regulation of the vehicles in a vehicle train to work entirely ideally, the wireless connection needs to work faultlessly, which is usually not the case, e.g. because of tunnels or roadside forests. Poor and uncertain data make close spacing impossible, as when the wireless connection is temporarily broken. Sensor data, e.g. the vehicle's location and speed, have then to be estimated, leading to greater uncertainty.

WO-2012/020297-A1 describes a control device and control method to cater for communication failure, based on the quality of the communication received. A set time between the vehicles may be determined in response to a period of communication failure.

US-2010/0256836-A1 describes a method for controlling a vehicle which is following another vehicle in cases where the vehicles communicate via wireless communication. It describes in general terms how the distance between the vehicles can be determined on the basis of the transmission quality of the wireless communication.

"Decentralized Model Predictive Control for Cooperative Multiple Vehicles subject to Communication Loss", Hojjat A. Izadi et al, Hindawi Publishing Corporation International Journal of Aerospace Engineering, volume 2011, article ID 198308, 13 pages, doi:10.1155/2011/198308, describes ways of dealing with communication failure. Nearby vehicles exchange information continuously about their predicted trajectories, and when there is communication failure the end of the trajectories is estimated. A tubular trajectory may be assumed round the trajectories of nearby vehicles whose trajectories are delayed or have disappeared, and constitutes a protection zone which the vehicles behind cannot enter. The tubular trajectory depends on manoeuvrability and communication delay, the less the communication delay the narrower the tube. The tubular trajectory may be made general and be calculated offline for different communication delays and be used as input data to the decentralised MPC regulator depending on the respective communication delay which inter alia regulates the spacing between the vehicles.

In the techniques described above, the spacing between the vehicles is determined directly by the degree of communication failure, the data estimates which have to be made to compensate for the loss of data are not taken into account

TEO R ET AL: "Decentralized Spacing Control of a String of Multiple Vehicles Over Lossy Datalinks", IEEE TRANSACTIONS ON CONTROL SYSTEMS TECHNOLOGY, IEEE SERVICE CENTER, NEW YORK, NY, US, vol. 18, no. 2, 1 March 2010 (2010-03-01), pages 469-473, XP011296853, ISSN: 1063-6536, discloses that the vehicles estimate the lead vehicle's state during communication losses by assuming that it would maintain its speed.

The object of the invention is therefore to propose an improved system for regulating the spacing between vehicles in vehicle trains during communication disturbances.

Summary of the invention

In one aspect the object described above is at least partly achieved by a system for regulation of vehicles in a vehicle train according to the first independent claim. The train's vehicles are adapted to communicating via wireless communication. The system comprises a processor unit adapted to receiving wirelessly from vehicles in the train data which comprise vehicle parameters for the vehicles and identification data which indicate the vehicle or vehicles from which said parameters come. The processor unit is further adapted to estimating one or more states for at least one vehicle $k_{i+1}$ in the train on the basis of at least one model of the vehicle and the parameters received, and to calculating for said estimated states one or more check values which indicate how reliable the estimation of the state or states is, depending on the transmission of the wireless data signals. The processor unit is further adapted to determining a distance $d$ between a vehicle $k_i$ behind and vehicle $k_{i+1}$ in the train on the basis of said check value or values, to generating a control signal which indicates said distance $d$ and to sending said control signal to a control unit of vehicle $k_i$, which vehicle is then regulated so that the distance $d_{i,i+1}$ between the two vehicles substantially becomes $d$.

The system achieves a way of dealing with wireless transmission which does not take place correctly. When there are no data, they are estimated instead and a check value for the estimated data is calculated. The check value indicates how good the estimation is. When data from a vehicle in front in the train are temporarily lost, there is uncertainty about where the train's vehicles in front are. The distance from the vehicle in front is then set as appropriate to how great the uncertainty is. When the check value again indicates that data are received from the vehicle in front, the distance may be reduced. How much the distance from vehicles in front should be increased or decreased depends on the magnitude of the check value, but there is preferably a longest/shortest permissible distance between two vehicles in the train. An advantage of this solution is that a safe distance from the vehicle in front is continually maintained, which means that the train's vehicles are regulated in a safe way. At the same time, the shortest possible distance from vehicles in front is maintained, helping to reduce fuel consumption.

In a second aspect the object of the present invention is at least partly achieved by a method for regulation of vehicles in a vehicle train which are adapted to communicating via wireless communication. The method comprises the steps of i) receiving wirelessly from the train's vehicles data which comprise vehicle parameters for the vehicles and identification data which indicate which vehicle or vehicles said parameters come from, ii) estimating one or more states for at least one vehicle $k_{i+1}$ in the train on the basis of at least a model of the vehicle and said parameters received, iii) calculating for said estimated states one or more check values which indicate how reliable the estimation of the state or states is, depending on the transmission of the wireless data, iv) determining a distance $d$ between a vehicle $k_i$ behind

and vehicle $k_{i+1}$ in the train on the basis of said check value or values, and v) regulating vehicle $k_i$ so that the distance $d_{i,i+1}$ between the two vehicles substantially becomes $d$.

In a third aspect the object is at least partly achieved by a computer programme programme which comprises programme instructions for enabling a computer system to perform steps according to the method described above, or according to any of the method steps described in the detailed description set out below, when the programme instructions are run on said computer system. The computer system may for example be installed in a vehicle in the train or be situated in an external unit, e.g. at the premises of a haulage operator.

Preferred embodiments are described in the dependent claims and in the detailed description.

Brief description of the attached drawings

The invention will now be described with reference to the attached drawings, in which:

Figure 1 is a schematic diagram of the system architecture for different layers of information structure.
Figure 2 is a schematic diagram of a vehicle notation herein used for a vehicle train.
Figure 3 is a block diagram of the system for regulation of vehicles in a vehicle train according to an embodiment of the invention.
Figure 4 is a schematic diagram of how centralised control works.
Figure 5 is a schematic diagram of how decentralised control works.
Figure 6 is a block diagram of the system for regulation of vehicles in a vehicle train according to another embodiment of the invention.
Figure 7 illustrates an example of the result of the invention when spacing between vehicles is regulated according to the check value.
Figure 8 is a schematic diagram illustrating a method for regulating vehicles in a vehicle train according to an embodiment of the invention.

Detailed description of preferred embodiments of the invention

A vehicle train is defined as a number of vehicles working as a unit. The vehicles belonging to the train are each controlled automatically in the longitudinal direction and communicate with one another through a wireless network. Figure 2 is a schematic diagram of a vehicle notation herein used for a vehicle train. The host vehicle has the notation 1 and the vehicles in front the notation 2,...N. The host vehicle may also be referred to as EGO and vehicle N as the leader vehicle. These notations are local for each vehicle in the train. The relative distance and speed between vehicle 1 and vehicle 2 are referred to as $d_{1.2}$, $v_{1.2}$ etc. Vehicle 1 has the speed $v_1$ etc. The notation for a random vehicle in the vehicle train is $k_i$, where $i$=1...N, in which case $k_N$ is therefore the leader vehicle. The general purpose of vehicle trains is to keep the vehicles as close to one another as possible by regulating their cruise controls and brake systems in order to take advantage of positive effects such as reduced air resistance.

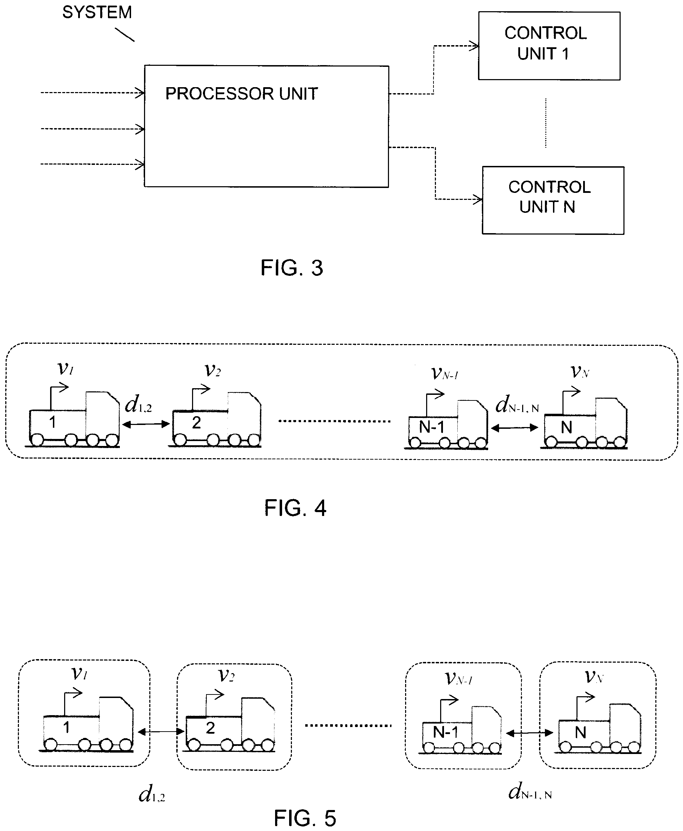

Figure 3 is a block diagram of the system for regulation of vehicles in a vehicle train according to an embodiment of the invention. The system comprises a processor unit which may for example be on board one of the train's vehicles or in an externally located unit. In one embodiment each of the train's vehicles is provided with a processor unit according to the invention. It is implicit that the system also comprises memory space connected to the processor unit, e.g. to store necessary data and instructions. The processor unit comprises also one or more processors which can execute machine code.

The processor unit is further adapted to receiving wirelessly from vehicles in the train data which comprises vehicle parameters for the vehicles and identification data which indicate the vehicle or vehicles from which said parameters come. The processor unit is preferably adapted to checking and keeping track of which vehicles data come from by means of said identification data. The wireless data illustrated in Figure 3 take the form of wireless signals represented by the broken lines reaching the processor unit. The signals may for example reach a unit on board the vehicle which is particularly adapted to receiving them, and be distributed via a network on board. The signals comprise data packets with associated identifications which indicate the vehicle from which the packet originates. The rate at which the signals are received in the vehicles is for example 10 Hz. In one embodiment, each vehicle has a specific ID number which is directly related to the vehicle and serves to identify a data packet. Each vehicle in a train is also provided, in one embodiment, with a specific train ID, which may for example be the ID number of the train's leader vehicle.

A usual network employed in vehicles is CAN (controller area network). Data on the network come from data sent wirelessly from other vehicles, and from sensors on board the host vehicle. The train's vehicles are usually equipped with a plurality of detectors which provide vehicle parameters such as the location and/or speed of the vehicles. Radar, lidar or a camera unit may for example provide information about the relative distance, the relative speed and/or the acceleration between the vehicles. The vehicles then each have at least one radar unit, lidar unit and/or camera unit.

GPS (global positioning system) is a satellite navigation system which gives the vehicle's location in coordinates of longitude and latitude and its speed to a GPS receiver on board. Each vehicle in the train preferably has a GPS unit. Information from the GPS unit may then be distributed to various systems on board the vehicle, e.g. via CAN, and to other vehicles via wireless communication. Information such as the engine's torque, the vehicle's weight, odometer data, direction and/or yaw rate is usually also readable from CAN. Information from CAN in one embodiment is read at a rate of 100 Hz.

The processor unit is further adapted to estimating one or more states for at least one vehicle $k_{i+1}$ in the vehicle train on the basis of at least a model of the vehicle and said vehicle parameters received. One embodiment also estimates states for vehicles which are outside the vehicle train, but only subject to their being able to transmit wireless data concerning vehicle parameters for the vehicles and to it being possible for these parameters to be ID-tagged. The parameters have therefore to be traceable to a specific vehicle. Radar information is preferably not taken into account when estimating vehicle states, since the source of information by radar cannot be verified solely on the basis of information from the radar. States are preferably estimated for all of the train's vehicles, making it possible to build up a reference system for the train. On the basis of check values for respective states as will be explained below, it is then possible to know where the reference system is uncertain, i.e. from which vehicle uncertain data come (or have been lost), and to adjust accordingly the regulation of the train's vehicles.

In one embodiment the processor unit is adapted to estimating said states by using an extended Kalman filter (EKF). We set out below an example of a model for a vehicle to be described which may be used in the estimation, and also the principle of an EKF. These examples are intended to illustrate the invention, which is therefore not restricted to this model or estimation method. The vehicle model according to the example expresses the acceleration of vehicle $k_i$ as

$$a_i = \frac{r_\omega^2}{J_\omega + m r_\omega^2 + i_t^2 i_f^2 \eta_t \eta_f J_e} \left( \frac{i_t i_f \eta_t \eta_f}{r_\omega} T_e - \frac{c_d A_a \rho_a v^2}{2} + \frac{c_d A_a \rho_a v^2}{2} \cdot \frac{f_i(d)}{100} - \right.$$

$$crmg\cos\alpha - mg\sin\alpha \tag{1}$$

in which $r_w$ is the vehicle's wheel radius, $J_\omega$ the vehicle's wheel inertia, $m$ the vehicle's weight, $i_t$ the vehicle's transmission ratio in current gear $i_f$ the vehicle's transmission ratio for the final gear, $\eta_t$ an efficiency constant for current gear, $\eta_f$ an efficiency constant for the final gear, $J_e$ the engine's moment of inertia, $T_e$ the engine torque, $c_d$ the air draught coefficient, $A_a$ the vehicle's front cross-sectional area, $\rho_\alpha$ the air density, $v$ the vehicle's speed, $f_i(d)$ a function for vehicle i's reduction of the air draught coefficient, $c_r$ the vehicle's rolling coefficient, $g$ the gravitational constant and $\alpha$ the gradient of the road. The model is then discretised in order to be usable in the estimation with for example an extended Kalman filter. The description of EKF set out below uses for the sake of simplicity a general model (2) for the vehicle's movement, which may therefore be matched by a discretised variant of model (1). The processor unit is also adapted to calculating for said estimated states one or more check values which indicate how reliable the estimation of the state or states is, depending on the transmission of the wireless data signals. This knowledge may then be used in regulating the train's vehicles to achieve safer regulation. When using for example EKF the processor unit is adapted to calculating one or more check values which comprise the variance $P$ for said estimated states. In the explanation of EKF below, estimated states are referred to as $\hat{x}_k$, i.e. states in vector format.

Extended Kalman filter

EKF is a filter which can handle non-linearities in models. The filtering involves a prediction step also called time update based on a physical model (1) of the vehicle, the previous information about states, and the sampling time. A general model of a non-linear movement model in discrete time is represented by

$$\hat{x}_{k+1} = f(\hat{x}_k, u_k, \theta, v_k) \tag{2}$$

in which $\hat{x}_k$ is the estimated state vector, $u_k$ input signals, $\theta$ model parameters and $v_k$ process noise. A prediction is then arrived at of desired states for the vehicle according to what the state or states should have been if the model was used alone. This step involves also calculating a predicted covariance matrix $P$ as

$$P_{k+1|k} = F_k P_{k|k} F_k^T + Q_k \tag{3}$$

in which

$$F_k = \frac{\partial f}{\partial x}\big|_{\hat{x}_{k|k}, u_k} \qquad (4)$$

and $Q_k$ is the covariance matrix for $v_k$. Thus $Q_k$ describes the model's uncertainty and may be weighted according to how well the model corresponds to reality.

The next step is to compare the predicted states with measured values for them, a step also called measurement update. This comparison involves using a model for the measured values according to

$$y_k = h(\hat{x}_k, u_k, \theta, e_k) \qquad (5)$$

in which $y_k$ represents the now pre-processed measured values in vector format and $e_k$ the measuring noise. The measurement update then involves comparing the pre-processed measured values with the estimated state vector according to

$$z_k = y_k - h(\hat{x}_{k|k-1}) \qquad (6)$$

The covariance for the measured value residual $S_k$ is calculated as

$$S_k = H_k P_{k|k-1} H_k^T + R_k \qquad (7)$$

in which $P_k$ is the covariance for states, $H_k$ is calculated as

$$H_k = \frac{\partial h}{\partial x}\big|_{\hat{x}_{k|k-1}} \qquad (8)$$

and $R_k$ is the covariance matrix for the measuring noise $e_k$. $R_k$ is the corresponding weight matrix to $Q_k$ and is adjustable according to the uncertainty of the sensor measured values. The estimated state update $\hat{x}_k$ is then calculated as

$$\hat{x}_{k|k} = \hat{x}_{k|k-1} + K_k \varepsilon_k \qquad (9)$$

in which the Kalman amplification K is

$$K_k = P_{k|k-1} H_k^T S_k^{-1} \qquad (10)$$

The covariance matrix $P$ for the estimated states is updated as

$$P_{k|k} = (I - K_k H_k) P_{k|k-1} \qquad (11)$$

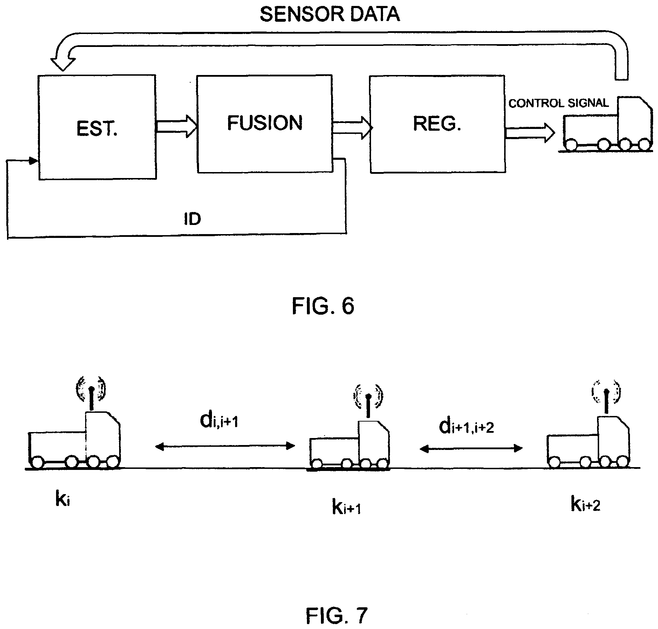

The covariance matrix $P$, which thus comprises check values for states, describes how well the predicted state values match with the measured sensor values. If the covariance is very small there is no difference between the values. The greater the covariance, the greater the difference between the values. If data loss occurs in the wireless transmission, there will be no measured values to take into account. Prediction of states then takes place only in the time update, with no measurement update, which will be reflected in the covariance matrix by high variance, i.e. one or more relatively high check values. The processor unit is further adapted to using the check value or values for one or more states as a basis for determining a distance $d$ between a vehicle $k_i$ behind and vehicle $k_{i+1}$, and to generating a control signal which indicates said distance $d$. The processor unit is further adapted to sending the control signal to a control unit on board vehicle $k_i$, which vehicle is then regulated so that the distance between the two vehicles substantially becomes $d$. It is thus possible for the regulation of the train's vehicles to take into account how reliable the data transmission is and to verify that the spacing between vehicles in the train is such that sudden changes can be handled without immediately having knowledge of them. For example, vehicle $k_{i+1}$ in front may suddenly brake and if there is a loss in the wireless transmission of this state to vehicle $k_i$ behind, the spacing between the vehicles provides assurance that the vehicle behind can be handle this without an accident occurring. In one embodiment the spacing is increased progressively the greater the check value, but there is preferably a maximum and a minimum value for the distance between two consecutive vehicles in the train. When the check value decreases, which thus means that the transmission of data resumes, one or more new distances $d$ between the vehicles are calculated and vehicle $k_i$ is regulated so that the spacing between them decreases again. In Figure 7 this is exemplified by the processor unit not receiving wireless data from vehicle $k_{i+1}$ for a certain period of time, e.g. 0.5 second. This leads to sensor data estimated to have high variance and to the distance $d_{i,i+1}$ being therefore increased to a safer value. However, the processor unit has received data without losses from $k_{i+2}$ at a sufficiently high rate, leading to estimated sensor data having low variance and to it being possible to maintain a smallest possible distance $d_{i+1,i+2}$ between the vehicles. The processor unit has here been described as a single unit, but it may of course also take the form of two separate processor units, one in each of vehicles $k_i$ and $k_{i+1}$.

Wireless transmission means here the conveying of data from the vehicle for which a state or states are to be estimated to another vehicle or roadside unit provided with the respective processor unit which is to perform the estimation. In the example with vehicles $k_i$ and $k_{i+1}$, the processor unit may therefore be on board vehicle $k_i$. Faults may then occur in the wireless transmission from vehicle $k_{i+1}$ to vehicles $k_i$. It is possible, however, that data from vehicle $k_{i+1}$ may have been received by another vehicle which then passes them on so that they can be received faultlessly by vehicle $k_i$. This then affects the check value which is calculated.

In one embodiment the system comprises a time unit adapted to monitoring the reception of wireless signals and measuring the time t when there is loss of data. The check value determined in this embodiment is adapted to being based also on this time t. Depending on how long the data loss lasts and on the check value or values, the distance $d$ between the vehicles is adjusted accordingly.

The control unit may be situated in the same vehicle as the processor unit. In another embodiment the control unit for which the processor unit calculates control signals is situated in a different vehicle from the processor unit. This depends inter alia on choice of regulating strategy. Figure 4 is a schematic diagram of how centralised control works for N vehicles in a vehicle train. The boundary frame signifies that all of the vehicles have information about all the other vehicles in the train. Each vehicle then solves the same optimisation problem. In other words, each of the train's vehicles calculates an optimum control signal for each vehicle in the train. Fusion and distribution of the optimum control signals are then required to achieve a control signal which becomes the actual output signal from the regulator to each control unit of the respective vehicles. Figure 5 is a schematic diagram of how decentralised control works. The boundary frames signify that each vehicle has a description of its own vehicle system and conducts optimisation of its own control signal(s), which means that the control signal or signals may be used immediately after having been calculated.

Figure 6 is a schematic diagram of a system for regulating the vehicles in a vehicle train according to an embodiment of the invention. The processor unit comprises in this embodiment three function units, as will be explained below. This strategy is only to be regarded as an example, and other strategies are applicable within the context of the invention. The "EST." unit performs in one embodiment the estimation of states for one or more vehicles, and calculates check values for each state as previously described. Sensor data from said sources tagged with identification data are fusioned in order to estimate for example vehicle states in terms of the location, speed and direction of the vehicles. The EST. unit therefore receives monitored raw data and verifies inter alia that the data are relevant for further estimations before they go into the next two units. On the basis of the check value for respective calculated states, distances $d$ from vehicles ahead are determined. The "FUSION" unit then fusions sensor values which are identifiable by markings, e.g. ID-tagged wireless data, with sensor data which are unknown, e.g. data from radar, and creates an ID vector which comprises all of the train's vehicles. This step may be performed in order to achieve as safe states as possible and thereby facilitate matters for the coming regulator. The FUSION unit comprises for example a further filtering with an extended Kalman filter. The estimated states in one embodiment are the location, speed and/or length of the train's vehicles which are to be covered by the regulation. If data packet loss from any of the train's vehicles occurs, one embodiment estimates states in the processor unit of the vehicle from which the data loss has occurred for as long as the FUSION unit determines that the vehicle is still part of the train. Data packet loss may mean that the vehicle from which the loss is identified has removed itself from the train and is out of range of the wireless transmission. The ID vector for all of the vehicles which are specified as requiring estimation is then fed back to the EST. unit, as represented by "ID" in Figure 6. The processor unit in this embodiment is adapted to using said vehicle parameters and data from radar as a basis for identifying which vehicles are part of the train, to generating an identity vector, an ID vector, and to estimating states for the vehicles in the ID vector. This information may then be used to determine distances d between the train's vehicles which the processor unit has been able to verify as being part of the train. The "REG". unit determines for one or more vehicles control signals which are transmitted to one or more control units of one or more vehicles. For example, control signals to cruise controls or brake systems of the train's vehicles may be generated. In one embodiment the regulating strategy is MPC (model predictive control), in which case the REG. unit uses the desired distance determined $d$ between two vehicles to generate control signals in order mainly to achieve the distances $d$. The REG. unit may therefore receive a number of distances $d$ desired between the vehicles in the train according to which it is to be regulated.

When MPC is employed, the regulator receives data such as current relative distances and speeds for all of the train's vehicles from the FUSION unit. A regulator using MPC will now be described.

MPC

MPC is an extension of an LQ regulator and is often used for solving multi-variable regulating problems. The LQ regulator minimises a cost function which is described as a linear differential equation. The general quadratic cost function is minimised with respect to the control signal $u$, e.g. the distance $d$, according to

$$min \sum_{j=0}^{\infty} \|x(k)\|_{P_1}^2 + \|u(k)\|_{P_2}^2 \qquad (12)$$

in which $P_1$ and $P_2$ are weight matrices and are used to balance how states and the control signal are assessed. MPC may also handle limitations of the control signal and states, in which case the cost function to be analysed becomes

$$J_{H_p}\big(x(k)\big) = \sum_{j=0}^{H_p-1} \|x(k+j)\|_{P_1}^2 + \|u(k+j)\|_{P_2}^2 \qquad (13)$$

in which $H_p$ is the prediction horizon, and limitations of the spacing between the train's vehicles, their speed and/or engine torque. One embodiment introduces an integrating action in the cost function (13) whereby the difference between two consecutive control signals is minimised. This embodiment results in more uniform regulation in that the control signal is not allowed to vary too much.

Output signals from the MPC comprise control signals to other regulators on board the vehicle in the form of a reference speed to the cruise control and/or a reference retardation to the brake system. The regulator will therefore serve as a superordinate regulator over the existing cruise controls and/or brake systems. In one embodiment the system comprises a conversion unit (not depicted) adapted to converting a control signal comprising torque $T_e$ to a suitable control signal for a control unit of a vehicle. The conditions within which this may take place are

$$T_e > -250, \ v_{ref} = v(k+1) \qquad (14)$$

$$T_e \leq -250, \ a_{ref} = \frac{v(k+1) - v(k)}{T_s} \qquad (15)$$

in which $v_{ref}$ is input signal to a cruise control and $a_{ref}$ input signal to a brake system. The values indicated are only to be regarded as examples, and other values are therefore applicable for the invention.

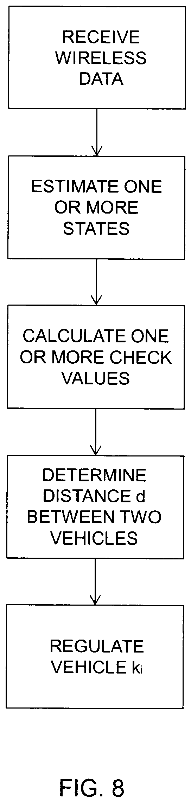

The invention relates also to a method for regulation of vehicles in a vehicle train which are adapted to communicating via wireless communication. The method is illustrated by the flowchart in Figure 8 and comprises a first step i) which comprises receiving from the train's vehicles wireless data which comprise vehicle parameters for the vehicles and identification data which indicate from which vehicle or vehicles said parameters come. As a second step ii) one or more states are estimated for at least one vehicle $k_{i+1}$ in the train on the basis of at least a model of the vehicle and the vehicle parameters received. The estimation may for example be performed by using extended Kalman filtering, but other estimation methods are also applicable. As a third step iii) one or more check values for estimated states are calculated which indicate how reliable the estimate of the state or states is, depending on the transmission of the wireless data. For example, a check value in the form of the variance, or covariance, for the estimated state may be calculated. If two or more states have been estimated, two or more check values may be determined. As a fourth step iv) a distance $d$ between a vehicle $k_i$ behind and vehicle $k_{i+1}$ in the train is determined on the basis of said check value or values. Depending on the magnitude of the check value, a distance $d$ is determined. If for example the variance is large, the distance $d$ increases. As a fifth step v), vehicle $k_i$ is regulated so that the distance $d_{i,i+1}$ between the two vehicles $k_i$ and $k_{i+1}$ substantially becomes $d$. The vehicle $k_i$ behind lowers or raises its speed to achieve $d$. The situation where the distance $d_{i,i+1}$ is already that desired may of course also occur, in which case vehicle $k_i$ does not alter its speed

In one embodiment the method comprises monitoring the reception of wireless signals and measuring the time $t$ when data loss takes place. This time may then be incorporated in the determination of the distance $d$. This is a further possible way of catering for data loss and provides further assurance of the regulation of spacing between vehicles in the train. In another embodiment the method comprises determining a distance $d$ between vehicles $k_i$ and $k_{i+1}$ which also depends on their speed. The distance $d$ is preferably related to how fast the vehicles are moving. If they are moving

**EP 2 862 160 B1**

at high speed, the distance *d* needs to be greater than when they are moving at lower speed.

The invention comprises also a computer programme product comprising computer programme instructions for enabling a computer system to perform steps according to the method described above when the programme instructions are run on said computer system. In one embodiment the instructions are stored on a medium which can be read by a computer system.

The present invention is not restricted to the embodiments described above. Sundry alternatives, modifications and equivalents may be used. The aforesaid embodiments therefore do not limit the invention's scope, which is defined by the attached claims.

**Claims**

1. A system for regulation of vehicles in a vehicle train which are adapted to communicating via wireless communication, which system comprises a processor unit adapted to

   - receiving wirelessly from vehicles in the train data which comprise vehicle parameters for the vehicles and identification data which indicate the vehicle or vehicles from which said parameters come,
   - estimating one or more states for at least one vehicle $k_{i+1}$ in the train on the basis of at least a model of the vehicle and said parameters received, further being **characterised in that** the processor unit is adapted to
   - calculating for said estimated states one or more check values which indicate how reliable the estimation of the state or states is, depending on the transmission of the wireless data signals,
   - determining a distance *d* between a vehicle $k_i$ behind and vehicle $k_{i+1}$ in the train on the basis of said check value or values, and generating a control signal for regulating said vehicle $k_i$ according to said distance *d*,
   - sending said control signal to a control unit of vehicle $k_i$, which vehicle is then regulated so that the distance between the two vehicles $k_i$ and $k_{i+1}$ becomes *d* such that a safe distance from the vehicle in front $k_{i+1}$ is continually maintained.

2. A system according to claim 1, in which the processor unit is adapted to calculating one or more check values which comprise the variance for said estimated states.

3. A system according to claim 1 or 2, in which the processor unit comprises a time unit adapted to monitoring the reception of wireless signals and measuring the time t when data loss occurs.

4. A system according to any one of the above claims, in which the processor unit is adapted to determining a distance *d* between the vehicles $k_i$ and $k_{i+1}$ which also depends on their speed.

5. A system according to any one of the above claims, in which the processor unit is adapted to estimating said states by using extended Kalman filtering.

6. A method for regulation of vehicles in a vehicle train which are adapted to communicating via wireless communication, which method comprises the steps of

   - receiving wirelessly from vehicles in the train data which comprise vehicle parameters for the vehicles and identification data which indicate the vehicle or vehicles from which said parameters come,
   - estimating one or more states for at least one vehicle $k_{i+1}$ in the train on the basis of at least a model of the vehicle and said parameters received, the method being further **characterised by** the following steps:

      - calculating for said estimated states one or more check values which indicate how reliable the estimation of the state or states is, depending on the transmission of the wireless data,
      - determining a distance *d* between a vehicle $k_i$ behind and vehicle $k_{i+1}$ in the train on the basis of said check value or values,
      - regulating vehicle $k_i$ so that the distance between the two vehicles $k_i$ and $k_{i+1}$ becomes d such that a safe distance from the vehicle in front $k_{i+1}$ is continually maintained.

7. A method according to claim 6, comprising calculating one or more check values which comprise the variance for said estimated states.

8. A method according to claim 6 or 7, comprising monitoring the reception of wireless signals and measuring the time

9

t when data loss occurs.

9. A method according to any one of claims 6 to 8, comprising determining a distance d between vehicles $k_i$ and $k_{i+1}$ which also depends on their speed.

10. A method according to any one of claims 6 to 9, comprising estimating said states by using Kalman filtering.

11. A computer programme product comprising computer programme instructions for enabling a computer system to perform steps of the method according to any one of claims 6 to 10 when the programme instructions are run on said computer system.

12. A computer programme product according to claim 11, in which the programme instructions are stored on a medium which can be read by a computer system.

**Patentansprüche**

1. System zur Regelung von Fahrzeugen, die mittels Drahtloskommunikation zu kommunizieren vermögen, in einem Fahrzeugverband, wobei das System eine Verarbeitungseinheit aufweist, die eingerichtet ist zum

 - drahtlosen Empfangen von Daten von Fahrzeugen in dem Verband, die Fahrzeugparameter für die Fahrzeuge und Identifikationsdaten enthalten, welche das Fahrzeug oder die Fahrzeuge angeben, von dem bzw. denen die Parameter kommen,
 - Schätzen einer oder mehrerer Zustände für zumindest ein Fahrzeug $k_{i+1}$ in dem Verband auf der Basis zumindest eines Modells des Fahrzeugs und der empfangenen Parameter, ferner **dadurch gekennzeichnet, dass** die Verarbeitungseinheit eingerichtet ist zum
 - Berechnen eines oder mehrerer Kontrollwerte für die geschätzten Zustände, die angeben, wie zuverlässig die Schätzung des Zustands oder der Zustände ist, abhängig von der Übertragung der drahtlosen Datensignale,
 - Ermitteln eines Abstands d zwischen einem Fahrzeug $k_i$ hinter dem und dem Fahrzeug $k_{i+1}$ in dem Verband auf der Basis des Kontrollwertes oder der Kontrollwerte und Erzeugen eines Steuersignals zum Regeln des Fahrzeugs $k_i$ entsprechend dem Abstand d,
 - Senden des Steuersignals an eine Steuereinheit des Fahrzeugs $k_i$, wobei dieses Fahrzeug dann so geregelt wird, dass der Abstand zwischen den zwei Fahrzeugen $k_i$ und $k_{i+1}$ d wird, sodass ein sicherer Abstand von dem vorderen Fahrzeug $k_{i+1}$ ständig aufrechterhalten wird.

2. System nach Anspruch 1, bei dem die Verarbeitungseinheit dazu eingerichtet ist, einen oder mehrere Kontrollwerte zu berechnen, welche die Varianz für die geschätzten Zustände enthalten.

3. System nach Anspruch 1 oder 2, bei dem die Verarbeitungseinheit eine Zeiteinheit aufweist, die dazu eingerichtet ist, den Empfang drahtloser Signale zu überwachen und die Zeit t zu messen, wenn ein Datenverlust auftritt.

4. System nach einem der vorhergehenden Ansprüche, bei dem die Verarbeitungseinheit dazu eingerichtet ist, einen Abstand d zwischen den Fahrzeugen $k_i$ und $k_{i+1}$ zu ermitteln, der auch von ihrer Geschwindigkeit abhängt.

5. System nach einem der vorhergehenden Ansprüche, bei dem die Verarbeitungseinheit dazu eingerichtet ist, die Zustände durch Verwenden einer erweiterten Kalmanfilterung zu schätzen.

6. Verfahren zur Regelung von Fahrzeugen, die mittels Drahtloskommunikation zu kommunizieren vermögen, in einem Fahrzeugverband, wobei das Verfahren die Schritte umfasst

 - drahtloses Empfangen von Daten von Fahrzeugen in dem Verband, die Fahrzeugparameter für die Fahrzeuge und Identifikationsdaten enthalten, welche das Fahrzeug oder die Fahrzeuge angeben, von dem bzw. denen die Parameter kommen,
 - Schätzen einer oder mehrerer Zustände für zumindest ein Fahrzeug $k_{i+1}$ in dem Verband auf der Basis zumindest eines Modells des Fahrzeugs und der empfangenen Parameter, wobei das Verfahren ferner **gekennzeichnet ist durch** die folgenden Schritte:
 - Berechnen eines oder mehrerer Kontrollwerte für die geschätzten Zustände, die angeben, wie zuverlässig die Schätzung des Zustands oder der Zustände ist, abhängig von der Übertragung der drahtlosen Datensignale,

**EP 2 862 160 B1**

- Ermitteln eines Abstands d zwischen einem Fahrzeug $k_i$ hinter dem und dem Fahrzeug $k_{i+1}$ in dem Verband auf der Basis des Kontrollwertes oder der Kontrollwerte,
- Regeln des Fahrzeugs $k_i$ solchermaßen, dass der Abstand zwischen den zwei Fahrzeugen $k_i$ und $k_{i+1}$ d wird, sodass ein sicherer Abstand von dem vorderen Fahrzeug $k_{i+1}$ ständig aufrechterhalten wird.

7. Verfahren nach Anspruch 6, umfassend ein Berechnen eines oder mehrerer Kontrollwerte, die die Varianz für die geschätzten Zustände enthalten.

8. Verfahren nach Anspruch 6 oder 7, umfassend ein Überwachen des Empfangs von Drahtlossignalen und ein Messen der Zeit t, wenn ein Datenverlust auftritt.

9. Verfahren nach einem der Ansprüche 6 bis 8, umfassend ein Ermitteln eines Abstandes d zwischen Fahrzeugen $k_i$ und $k_{i+1}$, der auch von ihrer Geschwindigkeit abhängt.

10. Verfahren nach einem der Ansprüche 6 bis 9, umfassend ein Schätzen der Zustände durch Verwenden einer Kalmanfilterung.

11. Computerprogrammprodukt mit Computerprogrammanweisungen, die einem Computersystem ermöglichen, Schritte des Verfahrens nach einem der Ansprüche 6 bis 10 auszuführen, wenn die Programmanweisungen auf dem Computersystem ablaufen.

12. Computerprogrammprodukt nach Anspruch 11, bei dem die Programmanweisungen auf einem Medium gespeichert sind, das von einem Computersystem gelesen werden kann.

**Revendications**

1. Système pour la régulation de véhicules dans un train de véhicule lesquels sont adaptés à la communication via une communication sans fil, lequel système comprend une unité de processeur adaptée pour

   - la réception sans fil à partir de véhicules dans les données de train comprenant des paramètres de véhicule pour les véhicules et des données d'identification indiquant le véhicule ou les véhicules à partir desquels lesdits paramètres viennent,
   - l'estimation d'un ou plusieurs états pour au moins un véhicule $k_{i+1}$ dans le train sur base d'au moins un modèle du véhicule et desdits paramètres reçus, **caractérisée en outre en ce que** l'unité du processeur est adaptée pour
   - le calcul pour lesdits états d'estimation indique une ou plusieurs valeurs de contrôle qui indiquent la fiabilité de l'estimation de l'état ou des états, selon la transmission des signaux de données sans fil,
   - la détermination d'une distance $d$ entre un véhicule $k_i$ derrière et un véhicule $k_{i+1}$ dans le train sur base de ladite valeur ou desdites valeurs de contrôle, et la génération d'un signal de commande pour la régulation dudit véhicule $ki$ selon ladite distance $d$,
   - l'envoi dudit signal de commande à une unité de commande du véhicule $k_i$, lequel véhicule est ensuite régulé de telle sorte que la distance entre les deux véhicules $k_i$ et $k_{i+1}$ devient d de sorte qu'une distance sûre par rapport au véhicule à l'avant $k_{i+1}$ est continuellement maintenue.

2. Système selon la revendication 1, dans lequel l'unité de processeur est adaptée pour le calcul d'une ou plusieurs valeurs de contrôle qui comprennent la variance pour lesdits états estimés.

3. Système selon la revendication 1 ou 2, dans lequel l'unité de processeur comprend une unité de temps adaptée à la surveillance de la réception des signaux sans fil et à la mesure du temps t lorsqu'une perte de données se produit.

4. Système selon l'une quelconque des revendications précédentes, dans lequel l'unité de processeur est adaptée pour la détermination d'une distance d entre les véhicules $k_i$ et $k_{i+1}$ qui dépend également de leur vitesse.

5. Système selon l'une quelconque des revendications précédentes, dans lequel l'unité de processeur est adaptée pour l'estimation desdits états à l'aide d'un filtrage de Kalman étendu.

6. Procédé pour la régulation de véhicules dans un train de véhicules qui sont adaptés à la communication via une communication sans fil, lequel procédé comprend les étapes suivantes

- la réception sans fil à partir des véhicules dans les données de train comprenant des paramètres de véhicule pour les véhicules et des données d'identification indiquant le véhicule ou les véhicules à partir desquels lesdits paramètres viennent,
- l'estimation d'un ou plusieurs états pour au moins un véhicule $k_{i+1}$ dans le train sur base d'au moins un modèle du véhicule et desdits paramètres reçus, le procédé étant en outre **caractérisée par** les étapes suivantes :
- le calcul pour lesdits états estimés d'une ou plusieurs valeurs de contrôle qui indiquent la fiabilité de l'estimation de l'état ou des états, selon la transmission des signaux de données sans fil,
- la détermination d'une distance $d$ entre un véhicule $k_i$ derrière et un véhicule $k_{i+1}$ dans le train sur base de ladite valeur ou desdites valeurs de contrôle,
- la régulation d'un véhicule $k_i$ pour que la distance entre les deux véhicules $k_i$ et $k_{i+1}$ devient $d$ de sorte qu'une distance sûre par rapport au véhicule à l'avant $k_{i+1}$ est continuellement maintenue.

7. Procédé selon la revendication 6, comprenant le calcul d'une ou plusieurs valeurs de contrôle lesquelles comprennent la variance pour lesdits états estimés.

8. Procédé selon la revendication 6 ou 7, comprenant la surveillance de la réception des signaux sans fil et la mesure du temps t lorsque la perte de données se produit.

9. Procédé selon l'une quelconque des revendications 6 à 8, comprenant la détermination d'une distance $d$ entre les véhicules $k_i$ et $k_{i+1}$ qui dépend également de leur vitesse.

10. Procédé selon l'une quelconque des revendications 6 à 9, comprenant l'estimation desdits états à l'aide d'un filtrage de Kalman.

11. Produit de programme informatique comprenant des instructions de programme informatique pour permettre à un système informatique d'exécuter des étapes du procédé selon l'une quelconque des revendications 6 à 10, lorsque les instructions de programme sont exécutées sur ledit système informatique.

12. Produit de programme informatique selon la revendication 11, dans lequel les instructions de programme sont stockées sur un support qui peut être lu par un système informatique.

FIG. 1

FIG. 2

SYSTEM

PROCESSOR UNIT

CONTROL
UNIT 1

CONTROL
UNIT N

FIG. 3

$v_1$       $v_2$       $v_{N-1}$       $v_N$

$d_{1,2}$       $d_{N-1,N}$

1    2    N-1    N

FIG. 4

$v_1$       $v_2$       $v_{N-1}$       $v_N$

1    2    N-1    N

$d_{1,2}$       $d_{N-1,N}$

FIG. 5

FIG. 6

FIG. 7

```
┌─────────────────────┐
│      RECEIVE        │
│     WIRELESS        │
│       DATA          │
└─────────────────────┘
           │
           ▼
┌─────────────────────┐
│    ESTIMATE ONE     │
│     OR MORE         │
│      STATES         │
└─────────────────────┘
           │
           ▼
┌─────────────────────┐
│   CALCULATE ONE     │
│  OR MORE CHECK      │
│      VALUES         │
└─────────────────────┘
           │
           ▼
┌─────────────────────┐
│    DETERMINE        │
│    DISTANCE d       │
│  BETWEEN TWO        │
│    VEHICLES         │
└─────────────────────┘
           │
           ▼
┌─────────────────────┐
│     REGULATE        │
│    VEHICLE k_i       │
└─────────────────────┘
```

FIG. 8

**EP 2 862 160 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2012020297 A1

- US 20100256836 A1

**Non-patent literature cited in the description**

- **HOJJAT A. IZADI et al.** Decentralized Model Predictive Control for Cooperative Multiple Vehicles subject to Communication Loss. Hindawi Publishing Corporation International Journal of Aerospace Engineering, vol. 2011, 13

- Decentralized Spacing Control of a String of Multiple Vehicles Over Lossy Datalinks. **TEO R et al.** IEEE TRANSACTIONS ON CONTROL SYSTEMS TECHNOLOGY. IEEE SERVICE CENTER, 01 March 2010, vol. 18, 469-473